# EUROPÄISCHE PATENTANMELDUNG

(11) **EP 3 722 087 A1**
(43) Veröffentlichungstag der Anmeldung: **14.10.2020**
(21) Anmeldenummer: 19168978.5
(22) Anmeldetag: 12.04.2019
(51) Int. Cl.: B32B 5/02, B32B 7/12, B32B 15/08, B32B 15/20, B32B 23/06, B32B 27/08, B32B 27/10, B32B 27/12, B32B 27/18, B32B 27/20, B32B 27/28, B32B 27/36, B65D 51/00, B65D 85/804

(54) **VERBUNDFOLIE FÜR KAPSELPLATINEN**

(71) Anmelder: Constantia Flexibles International GmbH, 1200 Wien (AT)
(72) Erfinder: BATTISTON, Paolo, 3100 Sankt Pölten (AT); SCHALK, Gerwin, 5311 CK Gameren (NL); RESCH, Helmut, 3203 Rabenstein (AT)
(74) Vertreter: Patentanwälte Pinter & Weiss OG

(57) **Zusammenfassung**

Verbundfolie (1) aus welcher vorzugsweise durch Stanz- oder Schneideverfahren zumindest eine Kapselplatine (2) für eine Getränkekapsel (3) herstellbar ist. Die Verbundfolie (1) weist eine siegelbare Innenseite (4) und eine nicht siegelnde Außenseite (5) aufweist, wobei die Innenseite (4) die Oberfläche einer Vliesschicht (6) mit einem siegelbaren Polymer ist und wobei die Außenseite (5) die Oberfläche einer haftträgen Schicht (7) ist. Die haftträge Schicht (7) ist die an die Außenseite (5) angrenzende Schicht einer gegebenenfalls mehrlagigen Außenlage (8) und die Vliesschicht (6) ist die an die Innenseite (4) angrenzende Schicht einer mehrlagigen Innenlage (9). Die Außenlage (8) ist über eine erste Verbindungsschicht (10) mit der Innenlage (9) verbunden. Die Innenlage (9) weist eine durchgängige Mittellage (11) auf, die über eine zweite Verbindungsschicht (12) mit der Vliesschicht (6) verbunden ist. Die Mittellage (11) ist ein extrudierter und in einer oder mehreren Richtungen orientierter Film, welcher in zumindest einer ersten Extrudatschicht (13) eine verformbare Polymermatrix aufweist, der ein Füllmittel aus nicht verformbaren Versprödungspartikeln zugesetzt ist.

## Beschreibung

Die gegenständliche Erfindung betrifft eine Verbundfolie aus welcher vorzugsweise durch Stanz- oder Schneideverfahren zumindest eine Kapselplatine für eine Getränkekapsel herstellbar ist, wobei die Verbundfolie eine siegelbare Innenseite und eine nicht siegelnde Außenseite aufweist, wobei die Innenseite die Oberfläche einer Vliesschicht mit einem siegelbaren Polymer ist und wobei die Außenseite die Oberfläche einer haftträgen Schicht ist, wobei die haftträge Schicht die an die Außenseite angrenzende Schicht einer gegebenenfalls mehrlagigen Außenlage ist, wobei die Vliesschicht die an die Innenseite angrenzende Schicht einer mehrlagigen Innenlage ist, und wobei die Außenlage über eine erste Verbindungsschicht mit der Innenlage verbunden ist.

Weiters betrifft die Erfindung ein Verfahren zur Herstellung einer Verbundfolie, aus welcher vorzugsweise durch Stanz- oder Schneideverfahren zumindest eine Kapselplatine für eine Getränkekapsel herstellbar ist.

Getränkekapseln, die in Form, Funktion und Größe genau auf bestimmte Getränkemaschinen abgestimmt sind, stellen insbesondere für die Herstellung von Kaffee- und Teeprodukten einen schnell wachsenden Markt dar. Solche Getränkekapseln bestehen im Allgemeinen aus einem Kapselnapf, beispielsweise aus einem tiefgezogenen Aluminium- oder Kunststoffmaterial oder aus Kunststoff-Spritzguss, der mit einem Getränkstoff, insbesondere Tee- oder Kaffeepulver gefüllt und mit einer Kapselplatine, meist aus einer Aluminiumfolie oder einer Aluminium-Verbundfolie, versiegelt wird.

Als "Platine" wird im Zusammenhang mit der gegenständlichen Offenbarung ein Verschlusselement aus einem Folienmaterial bezeichnet, wobei das Verschlusselement mittels einer Siegelseite auf den Rand eines Behälters siegelbar ist. Als "Kapselplatine" wird im Zusammenhang mit der gegenständlichen Offenbarung demgemäß eine derartige Platine bezeichnet, die zum Verschluss eines Kapselnapfs vorgesehen bzw. geeignet ist.

Zur Herstellung eines Getränks wird eine Getränkekapsel in eine passende Maschine druckdicht eingespannt, wobei der Kapselnapf mit zumindest einem Hohldorn durchbohrt wird, über den heißes oder kaltes Wasser unter Druck in das Kapselinnere eingeleitet werden kann. Es können also sowohl Heiß- als auch Kaltgetränke mit solchen Systemen hergestellt werden. Durch den Druck des eingepumpten Wassers beult sich die Kapselplatine nach Außen hin aus und gelangt mit einer üblicherweise gitter- oder rasterartig ausgebildeten Rückhaltestruktur in Anlagerung. Unter der Wirkung des Innendrucks des Wassers und des Gegendrucks der Rückhaltestruktur reißt die Kapselplatine an mehreren Stellen ein, sodass das fertiggestellte Getränk durch die Risse ausdringen kann und zu einem Getränkeauslass fließt.

Derartige Getränkesysteme erfreuen sich zunehmender Beliebtheit, dabei fällt aber eine große Menge an verbrauchten Kapseln als Müll an, wobei sich eine Wiederverwertung oft nur schwierig umsetzen lässt. Insbesondere mit der Verwendung unterschiedlicher Kunststoffmaterialien, gegebenenfalls in Verbindung mit Aluminium, lassen sich zwar kostengünstige und praktische Kapselsysteme verwirklichen, die Probleme der Wiederverwertbarkeit werden dabei jedoch ebenfalls größer.

Die Verwendung biologisch abbaubarer Materialien, etwa auf Basis von Polylactid (PLA) stellt einen vielversprechenden Ansatz dar, biologisch abbaubare Getränkekapseln herstellen zu können. So ist es beispielsweise gelungen, das Material der Kapselnäpfe vollständig mit biologisch abbaubaren Materialien zu ersetzen, ohne ehebliche Qualitätseinbußen in Kauf nehmen zu müssen.

Auch hinsichtlich der Kapselplatinen wurden zahlreiche Ansätze verfolgt, um die herkömmlichen Platinen aus Aluminium bzw. Aluminiumverbunden durch ein umweltfreundlicheres Material zu ersetzen.

EP 3 059 066 A1 offenbart beispielsweise eine Kapselplatine aus einer extrudierten und in einer oder mehreren Richtungen orientierten Polymerfolie, welche eine verformbare Polymermatrix aufweist, der ein Füllmittel aus nicht verformbaren Versprödungspartikeln zugesetzt wurde. Eine solche Kapselplatine bietet jedoch nur eine geringe Sauerstoffbarriere und konnte sich in der Praxis bislang nicht bewähren.

WO 18197676 A1 offenbart eine Kapselplatine aus einer Verbundfolie mit einer Trägerschicht aus einem pflanzlichen Pergament, einer Sauerstoffbarriereschicht, etwa aus PVOH oder EVOH, und einem siegelbaren Vlies aus einem biologisch abbaubaren Polymermaterial, z.B. PLA. Ein solcher Aufbau hat bei vom Anmelder durchgeführten Test in der Praxis jedoch zu unerwarteten Problemen geführt. Beispielsweise wies die Qualität der Sauerstoffbarriere über die Folienfläche starke Unregelmäßigkeiten auf und die Qualität der Siegelung entsprach nicht den Erfordernissen.

Wieder einen anderen Ansatz verfolgt die Offenbarung der WO 17063680 A1. Darin wird eine Kapselplatine offenbart, die eine Papier-Trägerschicht, eine Sauerstoffbarriereschicht und eine "geschwächte Schicht" aus einem biologisch abbaubaren Polymer umfasst. Die geschwächte Schicht weist eine Vielzahl an Mikroperforationen auf, die ein das gezielte Einreißen der Platine mit einem möglichst gleichmäßigen und verteilten Rissmuster gewährleisten soll. Solche Schwächungsperforationen sind jedoch aufwändig in der Herstellung und es ist schwierig, die Schwächungen in größeren Chargen mit ausreichender Regelmäßigkeit herzustellen.

Trotz des großen Aufwandes, der in dem Gebiet von unterschiedlichen Herstellern getätigt wird, hat sich in der Praxis herausgestellt, dass alternative Kapselplatinen oftmals nicht den Anforderungen genügen, die an sie gestellt werden. Bei vielen alternativen Kapselplatinen kommt es häufig zu einem äußerst unerwünschten Effekt, nämlich dass die Kapselplatine unter dem Druck in unkontrollierter Weise größerflächig aufplatzt, wobei sich mehrere Risse miteinander zu größeren Löchern verbinden. In dem Fall kann Getränkstoff, z.B. Kaffeemehl, aus der Getränkekapsel austreten und in das Getränk gelangen, was einen schwerwiegenden Qualitätsmangel darstellt, der auch vom Kunden als sehr störend empfunden wird.

Es besteht daher weiterhin ein Bedarf an Kapselplatinen (und an Folienmaterialien für solche Kapselplatinen), mit denen sich die komplexen gewünschten Eigenschaften sicher und auch im großen Maßstab reproduzierbar verwirklichen lassen.

Es ist somit eine Aufgabe der gegenständlichen Erfindung, unter Verwendung alternativer Materialien eine Verbundfolie zu schaffen, die die komplexen Anforderungen an Kapselplatinen auch praxistauglich erfüllt.

Diese und weitere Aufgaben werden erfindungsgemäß durch eine Verbundfolie der eingangs genannten Art gelöst, bei der die Innenlage eine durchgängige Mittellage aufweist, die über eine zweite Verbindungsschicht mit der Vliesschicht verbunden ist, wobei die Mittellage ein extrudierter und in einer oder mehreren Richtungen orientierter Film ist, welcher in zumindest einer ersten Extrudatschicht eine verformbare Polymermatrix aufweist, der ein Füllmittel aus nicht verformbaren Versprödungspartikeln zugesetzt ist. Die Erfinder haben herausgefunden, dass sich überraschender Weise mit einer derartigen Verbundfolie Kapselplatinen herstellen lassen, die einerseits gut und dauerhaft siegelbar sind, und die andererseits bei der Verwendung das gewünschte gleichmäßige Rissmuster ausbilden, ohne dass es zu einem unerwünschten größerflächigem "Aufplatzen" der Folie kommt. Die Vliesschicht bleibt dabei in den Bereichen, wo sich Risse bilden, im Wesentlichen intakt oder wird nur geringfügig aufgerissen und "überspannt" daher die Risse. Dadurch wird einerseits das Austreten von Getränkstoff verhindert, andererseits können die Risse auch nicht so leicht vom Getränkstoff verstopft werden.

Die Mittellage (bzw. der extrudierte und orientierte Film, der zur Herstellung der Mittellage verwendet wird) weist vorzugsweise eine Dicke von 10 µm bis 1000 µm, vorzugsweise von 20 µm bis 100µm, insbesondere von 40 µm bis 60 µm auf.

Die Polymermatrix der Mittellage besteht aus einem thermoplastischen Polymer, vorzugsweise einem biologisch abbaubaren thermoplastischen Polymer. Insbesondere kann die Polymermatrix Polylactid (PLA) aufweisen oder zumindest im Wesentlichen daraus bestehen. Gegebenenfalls kann die Polymermatrix ein oder mehrere nicht biologisch abbaubare thermoplastische Polymere aufweisen, wie etwa ein Polymer aus der Gruppe der Polyolefine, insbesondere Polyethylen oder Polypropylen, oder andere ähnliche Polymere. Die Polymermatrix kann gegebenenfalls PLA und/oder andere Polymere aus der Gruppe der Polyester aufweisen, wie etwa Polybutylensuccinat (PBS), Polyhydroxybuttersäure (PHB) oder ähnliche. Das PLA der Polymermatrix kann gegebenenfalls in seinen enantiomeren Formen (PLLA und/oder PDLA und/oder PDLLA) vorliegen. Gegebenenfalls kann die Polymermatrix eine oder mehrere thermoplastische Polymere aufweisen, die ausgewählt sind aus PHA, PTT, PBS, PBSA, bio-basierten Kunststoffen aus nachwachsenden Rohstoffen, wie etwa stärkebasierte Polymere, insbesondere stärkebasierte Polymere auf Basis von Mater-Bi ®, von Polyestern abgeleitete Polymere, wie etwa Polymere vom Typ Ecoflex®, und der gleichen. Gegebenenfalls kann die Polymermatrix der Mittellage Mischungen der obengenannten Polymere Mischungen der oben genannten Stoffe aufweisen. Weiters können der Polymermatrix Hilfsstoffe zugesetzt sein.

Zu Beispielen für verwendbare Füllmittel zählen, ohne darauf beschränkt zu sein, Mineralische Füllstoffe, die gegebenenfalls ausgewählt sind aus Calciumcarbonat, Talk, Titandioxid und ähnliche mineralische Füllstoffen, organische Füllstoffe, welche eine den mineralischen Füllstoffen äquivalente Funktion aufweisen, sowie Mischungen dieser Materialien. Zu Beispielen für organische Füllstoffe zählen thermoplastische und duroplastische Polymere, die bei der Verarbeitungstemperatur der Polymermatrix nicht schmelzen und nicht erweichen, und während der Orientierung als nicht verformbare Phase wirken. Organische Füllmittel können beispielsweise eine oder mehrere der kristallinen Phasen eines Polymers aufweisen, das in der Polymermatrix enthalten ist, bzw. aus dem die Polymermatrix besteht.

In vorteilhafter Weise kann die Polymermatrix der ersten Extrudatschicht aus einem biologisch abbaubaren Polymer, insbesondere auf Basis von Polylactid (PLA), besteht, und/oder die Vliesschicht kann aus einem biologisch abbaubaren Polymer, insbesondere auf Basis von Polylactid (PLA), bestehen. Dadurch lassen sich auf erfindungsgemäße Weise vollständig biologisch abbaubare und/oder kompostierbare und/oder vollständig bio-basierte Kapselplatinen erzeugen, die die vorteilhaften Effekte realisieren.

Als "biologisch abbaubare Polymere" werden im Zusammenhang mit der gegenständlichen Offenbarung Polymermaterialien bezeichnet, die gemäß der Europäischen Norm EN 13432 / EN 14995 in der zum Prioritätszeitpunkt der Anmeldung gültigen Fassung als vollständig kompostierbar betrachtet werden können. Zu Beispielen solcher biologisch abbaubaren Polymere zählen, ohne darauf beschränkt zu sein, alle obenstehend für die Polymermatrix angeführten Polymere, sofern sie den Kriterien entsprechen, insbesondere Bio-PLA, Bio-PBS, Bio-PHB, etc.

Unter dem Begriff "biologisch abbaubare Polymere" werden im Zusammenhang mit der gegenständlichen Offenbarung im weiteren Sinn auch Polymermaterialien verstanden, die auf Basis nachwachsender Rohstoffe produziert werden, diese werden auch als "bio-basierte Kunststoffe" bezeichnet.

In vorteilhafter Weise kann das Füllmittel der Polymermatrix der ersten Extrudatschicht mit einem Gewichtsanteil von 5 % bis 95 %, vorzugsweise von 20 % bis 60 %, insbesondere etwa 60 % zugesetzt sein. Das Füllmittel aus nicht verformbaren Versprödungspartikeln sorgt in Verbindung mit der Orientierung der aus dem Extrudat erzeugten Folie, die den Film der Mittellage ausbildet, für eine gezielt beeinflussbare Versprödung, die ein Bersten der Folie ermöglicht und gleichzeitig die Rissausbreitung einschränkt, sodass in der aus der Verbundfolie hergestellte Kapselplatine aufgrund des Innen- und Gegendrucks ein sehr regelmäßiges und feines Muster aus zahlreichen Rissen entsteht, das den an die Kapselplatine gestellten Anforderungen genügt. Das Berstverhalten der Verbundfolie wird in erster Linie durch diese Mittelschicht definiert und kann daher auch durch eine gezielte Beeinflussung der Eigenschaften dieser Mittelschicht beeinflusst werden. Die anderen Schichten beeinflussen das Rissverhalten nur in deutlich geringerem Ausmaß, sind aber für die Gesamtheit der Eigenschaften der Kapselplatine von erheblicher Bedeutung.

In einer vorteilhaften Ausführungsform kann die Mittellage über die Fläche jeder Kapselplatine eine homogene Struktur aufweisen. Gegebenenfalls kann die Innenlage über die Fläche jeder Kapselplatine eine homogene Struktur aufweisen. Die komplexen technischen Wirkungen der Erfindung lassen sich auf einfache Weise unter Verwendung ebener Einzelfolien realisieren, die miteinander beispielsweise über herkömmliche Klebersysteme zu der Verbundfolie kombiniert werden können.

Als "homogene Struktur" wird im Zusammenhang mit der gegenständlichen Offenbarung insbesondere eine flächige Struktur bezeichnet, die zumindest frei von geplant eingebrachten Materialschwächungen ist. Vorzugsweise weist eine homogene Struktur auch eine gleichmäßige Materialverteilung auf. Die Materialeigenschaften (insbesondere Dicke, Dichte, spezifisches Gewicht, Materialverteilung, etc.) einer Lage mit einer homogenen Struktur sind über die Folienfläche im Wesentlichen konstant.

In vorteilhafter Weise kann die erste Verbindungsschicht und/oder die zweite Verbindungsschicht einen biologisch abbaubaren Kleber aufweisen. Biologisch abbaubare Klebersysteme, die auch lebensmittelverträglich sind, sind im Fachbereich bekannt und im Handel erhältlich. Die Verwendung biologisch abbaubarer Kleber erlaubt die Herstellung komplett biologisch abbaubarer bzw. kompostierbarer Kapselplatinen. In Verbindung mit biologisch abbaubaren bzw. kompostierbaren Kapselnäpfen können vollständig biologisch abbaubare bzw. kompostierbare Getränkekapseln hergestellt werden.

In einer vorteilhaften Ausführungsform kann die Mittellage eine koextrudierte Folie sein, welche zumindest die erste Extrudatschicht, eine Extrusions-Haftvermittlerschicht und eine Sauerstoff-Barriereschicht umfasst. Die Dicke der Extrusions-Haftvermittlerschicht ist sehr gering und kann beispielsweise weniger als etwa 2 µm und gegebenenfalls weniger als etwa 1 µm betragen. Der Dickenanteil der Sauerstoff-Barriereschicht ist, verglichen mit der ersten Extrudatschicht, ebenfalls sehr gering, beispielsweise kann die Dicke der Sauerstoff-Barriereschicht zwischen 1 µm und 10 µm, gegebenenfalls zwischen 2 und 5 µm und insbesondere zwischen 2,5 und 4 µm betragen. Aufgrund der geringen Dicke der Sauerstoff-Barriereschicht wird das vorteilhafte Berstverhalten der Verbundfolie nicht oder nur unwesentlich beeinflusst. Auch kann die biologische Abbaubarkeit bzw. Kompostierbarkeit der Verbundfolie durch eine geeignete Wahl der Dicke und des Werkstoffs der Sauerstoff-Barriereschicht bzw. der Extrusions-Haftvermittlerschicht gewährleistet werden.

Zu Beispielen für Materialien, die für die Sauerstoff-Barriereschicht verwendet werden können zählen, ohne darauf eingeschränkt zu sein, PVOH, EVOH, PVDC, ALOx, SiOx. Als ausreichender Wert für die Sauerstoffbarriere einer Kapselplatine wird üblicherweise ein Wert der flächenbezogenen Sauerstoffdurchlässigkeit von weniger als 10 cm³/(m² * d * bar), insbesondere weniger als 1 cm³/(m² * d * bar), betrachtet. Wichtig ist auch die Wasserdampfbarriere, für diese wird ein Wert von weniger als 50 cm³/(m² * d * bar), insbesondere weniger als 10 cm³/(m² * d * bar) als ausreichend betrachtet.

Zu Beispielen für Materialien, die für die Extrusions-Haftvermittlerschicht verwendet werden können zählen insbesondere, ohne darauf eingeschränkt zu sein, Haftvermittler auf Basis von PSA, auf Sojabohnen basierende Kleber ("Soybean-Based-Adhesives"), und ähnliche.

In einer vorteilhaften Ausgestaltung der erfindungsgemäßen Verbundfolie kann die haftträge Schicht eine Papier- oder Aluminiumlage aufweisen, die gegebenenfalls bedruckt sein kann. Weiters kann die Verbundfolie geprägt sein. Aluminium hat vorteilhafte Barriereeigenschaften, insbesondere gegenüber Sauerstoff, und kann in einem Recyclingprozess verhältnismäßig leicht zurückgewonnen werden. Auf eine zusätzliche Sauerstoff-Barriereschicht, etwa die oben beschriebene Sauerstoff-Barriereschicht in der Mittellage, kann daher gegebenenfalls verzichtet werden. Als Papier kann ein biologisch abbaubares bzw. kompostierbares Papier gewählt werden, was die Herstellung einer biologisch abbaubaren bzw. kompostierbaren Verbundfolie ermöglicht. Sowohl Aluminium, als auch Papier weisen eine gute Bedruckbarkeit auf.

Als "haftträge Schicht" wird im Zusammenhang mit der gegenständlichen Offenbarung eine an die Außenfläche der Verbundfolie angrenzende Verbundschicht bezeichnet, die in einem Versiegelungsverfahren nicht an der Siegelbacke anhaftet. Die erforderlichen Hafteigenschaften der haftträgen Schicht sind daher in Bezug auf die Siegeleigenschaften (insb. Druck, Temperatur, Zeit) der gegenüberliegenden Siegelschicht bezogen, insofern dass ein Anhaften der Oberfläche der haftträgen Schicht an der Siegelbacke bei den für die Siegelung erforderlichen Parametern verhindert wird.

In einer vorteilhaften Ausgestaltung der Erfindung kann die Außenlage einen Verbund mit Aluminium und Papier umfassen und gegebenenfalls bedruckt sein. Dadurch lassen sich kostengünstige Kapselplatinen herstellen, die die vorteilhaften Eigenschaften beider Materialien kombinieren.

Die Erfindung betrifft weiters eine Kapselplatine, die vorzugsweise durch ein Stanz- oder Schneideverfahren aus einer oben beschriebenen Verbundfolie hergestellt ist. Die Lieferung an den Betreiber der Verpackungsanlage kann somit entweder als Folienbahn, vorzugsweise in Rollen- oder Bogenform, erfolgen, die in der Verpackungsanlage ausgestanzt (bzw. ausgeschnitten) und auf den Kapselnapf gesiegelt wird, oder in Form von fertig ausgeschnittenen Kapselplatinen, die beispielsweise gestapelt und verpackt zugeliefert werde können. Zum Ausstanzen bzw. Ausschneiden der Kapselplatine(n) aus der Verbundfolie können beliebige Schneid-, Trenn- und Stanzverfahren verwendet werden, die für diesen Einsatzzweck geeignet sind. Neben herkömmlichen Stanzwerkzeugen können beispielsweise Laserschnittverfahren oder ähnliches zur Anwendung kommen.

In einem weiteren Aspekt umfasst die Erfindung eine Getränkekapsel mit einem Kapselnapf und einer erfindungsgemäßen Kapselplatine.

Erfindungsgemäß wird die technische Aufgabe in einem weiteren Aspekt durch ein Verfahren der eingangs genannten Art gelöst, welches die folgenden Schritte aufweist: bereitstellen einer gegebenenfalls mehrlagigen Außenlage mit einer haftträgen Schicht, bereitstellen einer Mittellage, die durch Extrudieren zumindest einer ersten Extrudatschicht hergestellt ist, wobei die erste Extrudatschicht eine verformbare Polymermatrix aufweist, der ein Füllmittel aus nicht verformbaren Versprödungspartikeln zugesetzt ist, Orientieren der Mittellage in einer oder mehreren Richtungen, bereitstellen einer Vliesschicht mit einem siegelbaren Polymer, Verbinden der Mittelage über eine erste Verbindungsschicht mit der Außenlage und Verbinden der Vliesschicht über eine zweite Verbindungsschicht mit der Mittellage, wobei die Mittellage und die Vliesschicht eine Innenlage der Verbundfolie ausbilden, wobei die Vliesschicht eine siegelbare Innenseite der Verbundfolie ausbildet und wobei die Außenlage mit der haftträgen Schicht eine nicht siegelnde Außenseite der Verbundfolie ausbildet. Dies erlaubt eine vorteilhafte Herstellung der erfindungsgemäßen Verbundfolie. Die Reihenfolge, in der die Vliesschicht mit der Mittellage und die Mittellage mit der Außenlage verbunden werden, kann gemäß den technischen Erfordernissen beliebig gewählt werden.

In vorteilhafter Weise kann als Polymermatrix der ersten Extrudatschicht ein biologisch abbaubares Polymer, insbesondere auf Basis von Polylactid (PLA), verwendet werden. Unabhängig davon kann als Vliesschicht ein Vliesmaterial aus einem biologisch abbaubaren Polymer, insbesondere auf Basis von Polylactid (PLA), verwendet werden. Das biologisch abbaubare Polymer der ersten Extrudatschicht kann derselben chemischen Gruppe angehören, wie das biologisch abbaubare Polymer des Vliesmaterial oder die beiden Materialien können identisch sein. Andererseits können unterschiedliche Materialien für das Polymer der ersten Extrudatschicht und das Vliesmaterial verwendet werden.

In einer vorteilhaften Ausführungsform kann die Mittellage als koextrudierte Folie mit zumindest der ersten Extrudatschicht, einer Extrusions-Haftvermittlerschicht und einer Sauerstoff-Barriereschicht extrudiert werden.

In einem weiteren Aspekt betrifft die Erfindung ein Verfahren zur Herstellung einer Kapselplatine, wobei eine erfindungsgemäße Kapselplatine, vorzugsweise durch Stanzen oder Schneiden, aus einer erfindungsgemäßen Verbundfolie hergestellt wird.

In einem weiteren Aspekt betrifft die Erfindung ein Verfahren zur Herstellung einer Getränkekapsel, welches die folgenden Schritte aufweist: Bereitstellen eines Kapselnapfs, Einfüllen von Getränkstoff in den Kapselnapf und Versiegeln des Kapselnapfs mit einer erfindungsgemäßen Kapselplatine.

Es wird darauf hingewiesen, dass das Gestalten, Herstellen, Prüfen und Auswählen geeigneter Kombinationen an Werkstoffen und Herstellungsschritten für die erfindungsgemäßen Produkte bzw. Verfahren im Können eines Durchschnittsfachmanns, der Kenntnis von den hierin dargelegten Lehren hat, liegt.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt
Fig.1 eine erfindungsgemäße Verbundfolie und deren Schichtaufbau in einer generischen und schematisierten Darstellung,
Fig. 2 einen Schichtaufbau der erfindungsgemäßen Folie gemäß einer spezifischen Ausführungsform,
Fig. 3 eine schematische Darstellung der erfindungsgemäßen Folie zur Erläuterung der Rissausbildung und
Fig. 4 eine mit einer Kapselplatine versiegelte Getränkekapsel nach der Verwendung, wobei die erfindungsgemäß erzielbare Rissverteilung verschaubildlicht ist.

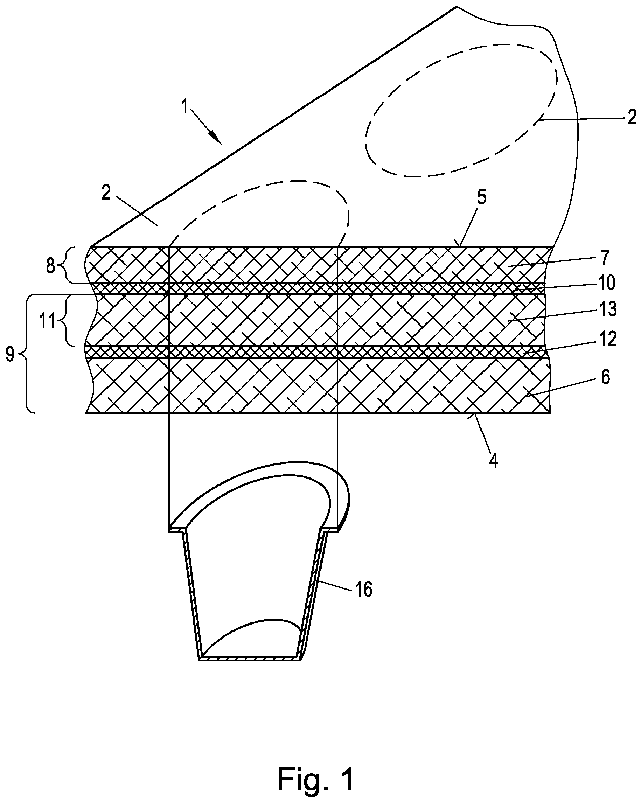

Die in Fig. 1 dargestellte Verbundfolie 1 stellt den Aufbau der erfindungsgemäßen Verbundfolie 1 in einer generischen Weise dar, wobei die Dicken der einzelnen Schichten stark übertrieben und nicht maßstabsgetreu dargestellt sind, um die Beschreibung zu erleichtern. Auch die Dickenverhältnisse der einzelnen Schichten zueinander sind rein aus Gründen der Darstellbarkeit gewählt und spiegeln die tatsächlichen Dickenverhältnisse nicht wider. Die Verbundfolie 1 definiert eine Vielzahl an Kapselplatinen 2, die aus der Verbundfolie 1 ausgeschnitten oder ausgestanzt werden können.

Die Verbundfolie 1 weist eine nicht siegelnde Außenseite 5 und eine siegelbare Innenseite 4 auf. Die Außenseite 5 ist die freie Oberfläche einer Außenlage 8 und die Innenseite 4 ist die freie Oberfläche einer Innenlage 9, wobei die Außenlage 8 und die Innenlage 9 über eine erste Verbindungsschicht 10 miteinander verbunden sind. Die erste Verbindungsschicht 10 kann beispielsweise ein herkömmlicher lebensmittelverträglicher Kaschierkleber sein, oder bevorzugt ein biologisch abbaubarer Kaschierkleber, wie er beispielsweise von der Firma Morchem unter der Produktbezeichnung Morchem PS 255 ECO + CS-95 vertrieben wird. Selbstverständliche können auch andere Klebesysteme verwendet werden, die den Spezifikationen entsprechen.

Die Außenlage 8 besteht in der in Fig. 1 dargestellten Ausführungsform aus einer einzigen Materialschicht, die als "haftträge Schicht 7" bezeichnet wird. Falls die Außenlage 8 mehrere Schichten aufweist, bildet die haftträge Schicht 7 die äußerste Lage der Verbundfolie 1 und bildet die nicht siegelnde Außenseite 5 aus. Die haftträge Schicht 7 kann beispielsweise aus Papier oder Aluminium bestehen, wobei auch Verbundstoffe, beispielsweise aus Papier/Aluminium verwendet werden können. Sowohl Aluminium, als auch Papier können im Allgemeinen als "haftträge Schicht" bezeichnet werden, da sie bei der Siegelung nicht an den Siegelbacken, die direkt an der nicht siegelnden Außenfläche 5 anliegen, haften bleiben.

Die Innenlage 9 umfasst eine Mittellage 11 und eine Vliesschicht 6, die über eine zweite Verbindungsschicht 12 miteinander verbunden sind. Die zweite Verbindungsschicht 12 kann ebenfalls ein Kaschierkleber sein, vorzugsweise ein biologisch abbaubarer Kaschierkleber. Die Kaschierkleber der ersten Verbindungsschicht 10 und der zweiten Verbindungsschicht 12 können identische sein, dies ist jedoch keine zwingende Voraussetzung.

Die Vliesschicht 6 besteht aus einem Vlies mit einem siegelbaren Polymer. Vorzugsweise ist die Vliesschicht 6 biologisch abbaubar. Insbesondere kann die Vliesschicht 6 ausschließlich aus Fasern von biologisch abbaubaren Polymeren bestehen. In einer Ausführungsform ist die Vliesschicht 6 aus Polylactid-Fasern (PLA-Fasern) aufgebaut. Sollten die Vliesschicht 6 Fasern aus unterschiedlichen Materialien aufweisen, ist darauf zu achten, dass die Siegelbarkeit der Vliesschicht 6 (bzw. der siegelbaren Innenseite 4) gewährleistet ist.

Die Mittelschicht 11 besteht im in Fig. 1 dargestellten Fall aus einem Filmmaterial mit einer einzigen ersten Extrudatschicht 13. Das Filmmaterial wurde vor dem Kaschieren mit der Vliesschicht 6 und der Außenlage 8 in einer oder mehreren Richtungen orientiert. Der für die erste Extrudatschicht 13 verwendeten verformbaren Polymermatrix wurde vor dem Extrudieren ein Füllmaterial zugesetzt, das nicht verformbare Versprödungspartikel aufweist. Der Zusatz des Füllmaterials bewirkt in Verbindung mit der Orientierung eine Versprödung der Mittelschicht 11, die das Berstverhalten der Verbundfolie 1 wesentlich bestimmt. Eine (einlagige) Folie, die für eine solche Mittelschicht 11 geeignet ist, ist im Stand der Technik aus der EP 3059066 A1 an sich bekannt. Die Erfinder der gegenständlichen Erfindung haben herausgefunden, dass sich die Eigenschaften einer aus dem in EP 3059066 A1 offenbarten Folienmaterial hergestellten Kapselplatine 2 durch die erfindungsgemäße Anordnung gegenüber der Einzelfolie wesentlich verbessern lassen, wobei überraschender Weise das vorteilhafte Berstverhalten der einlagigen Folie bewahrt, wenn nicht sogar verbessert wird. Es wird darauf hingewiesen, dass alle Folien, die in EP 3059066 A1 offenbart sind, auch für die gegenständliche Erfindung als Mittellage 11 verwendet werden können, sofern sie unter den Definitionsbereich der gegenständlichen Ansprüche fallen. Die gegenständliche Anmeldung ist jedoch nicht auf Mittellagen 11 beschränkt, die als Folie in EP 3059066 A1 offenbart sind. Insbesondere können auch mehrschichtige, gereckte Koextrudate als Mittellage 11 verwendet werden, wie dies in Verbindung mit weiteren hierin beschriebenen Ausführungsformen offenbart ist.

In Fig. 1 ist weiters ein Kapselnapf 16 schematisch dargestellt, dem eine von der Verbundfolie definierte Kapselplatine 2 zugeordnet ist. Diese Darstellung dient lediglich dem besseren Verständnis und veranschaulicht, wie eine aus der Verbundfolie 1 hergestellte Kapselplatine 2 auf den Rand des Kapselnapfes 16 aufgesiegelt werden kann. Die Siegelung zwischen dem Rand des Kapselnapfes 16 und der siegelbaren Innenseite 4 muss ausreichend stark sein, dass sie sie sich bis zum Erreichen des Berstdrucks (und zumindest ein wenig darüber hinaus) nicht löst. Weiters muss die Siegelung unter Raum- und/oder Lagerbedingungen dauerbeständig sein und darf mit der Zeit nicht wesentlich an Qualität einbüßen.

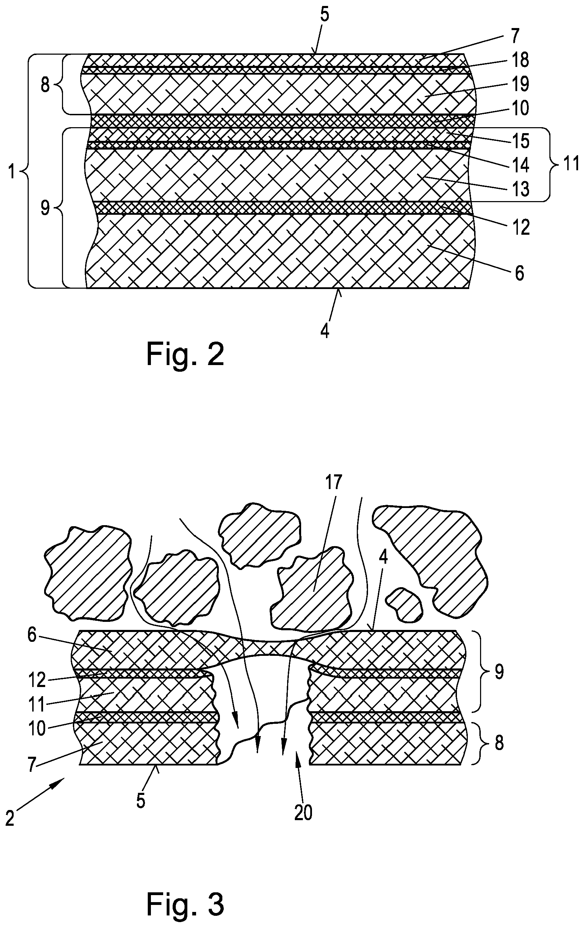

Fig. 2 zeigt eine Variante des erfindungsgemäßen Schichtaufbaus einer Verbundfolie 1, wobei wiederum eine Innenlage 9 über eine erste Verbindungsschicht 10 mit einer Außenlage 8 verbunden ist. Die Innenschicht 9 umfasst wiederum die Vliesschicht 6, eine zweite Verbindungsschicht 12 und eine Mittellage 11. Die Außenlage 8 umfasst wiederum eine haftträge Schicht 7, die die nicht siegelnde Außenseite 5 ausbildet. Die in Fig. 2 dargestellte Verbundfolie 1 kann alle Merkmale aufweisen, die auch in Verbindung mit der Beschreibung von Fig. 1 offenbart wurden, sofern dem kein technischer Widerspruch entgegensteht. Zusätzlich können die Mittellage 11 und/oder die Außenlage 8 unabhängig voneinander einen mehrschichtigen Aufbau aufweisen.

Die in Fig. 2 dargestellte Mittellage 11 weist eine erste Extrudatschicht 13 auf, die über die zweite Verbindungsschicht 12 mit der Vliesschicht 6 verbunden ist. Zusätzlich umfasst die Mittellage 11 eine Extrusions-Haftvermittlerschicht 14 und eine Sauerstoff-Barriereschicht 15. Die Mittellage 11 wird vorzugsweise durch Koextrusion der ersten Extrudatschicht 13, der Extrusions-Haftvermittlerschicht 14 und der Sauerstoff-Barriereschicht 15 hergestellt und danach in einer oder mehreren Richtungen orientiert, bevor sie über die erste Verbindungsschicht 10 bzw. der zweiten Verbindungsschicht 12 mit der Außenlage 8 bzw. der Vliesschicht 6 verbunden wird. Die Reihenfolge, in der die Verbindung zwischen Mittellage 11 und Vliesschicht 6 bzw. zwischen Mittellage 11 und Außenlage 8 erfolgt, ist nicht wesentlich und kann gemäß den technischen Erfordernissen nach Bedarf gewählt werden. Der Vorteil einer koextrudierten Mittellage 11 mit einer Sauerstoff-Barriereschicht 15 liegt darin, dass die Sauerstoff-Barriereschicht 15 besonders dünn hergestellt werden kann, beispielsweise in einer Dicke von unter 5 µm, beispielsweise etwa 3 µm, und dennoch ihrer Funktion erfüllt.

Zusätzlich oder alternativ zu der Extrusions-Haftvermittlerschicht 14 und der Sauerstoff-Barriereschicht 15 kann die Mittellage 11 beliebige andere Schichten aufweisen, die mit der ersten Extrudatschicht 13 beispielsweise über Kleberschichten oder als Koextrudat verbunden sind, wobei die Mittellage 11 als Ganzes vor dem Verbinden mit den anderen Lagen orientiert wird.

Es wäre zwar möglich, eine Sauerstoff-Barriereschicht 15 beispielsweise auf die haftträge Schicht 7, z.B. aus Papier, aufzuextrudieren, bei Versuchen hat sich jedoch herausgestellt, dass es dabei zu Problemen mit der Gleichmäßigkeit der Sauerstoffbarrierefunktion kommen kann. Es wurde noch nicht abschließend geklärt, woran diese Fehleranfälligkeit liegt, es wird jedoch vermutet, dass die Porosität des Papiermaterials sich nachteilig auf die aufextrudierte Barriereschicht auswirkt. Dennoch wäre es grundsätzlich möglich, eine Sauerstoff-Barriereschicht als eine auf die haftträge Schicht 7 aufextrudierte (oder aufgeklebte) Schicht zu realisieren, sofern das Problem mit der ungleichmäßigen Sauerstoffbarrierefunktion verfahrenstechnisch gelöst wird.

Die in Fig. 2 dargestellte Außenlage 8 weist ebenfalls einen mehrschichtigen Aufbau auf, wobei die haftträge Schicht 7 über eine dritte Verbindungsschicht 18 mit einer zusätzlichen Schicht 19 verbunden ist. Gegebenenfalls kann auch die Außenlage 8 weitere Schichten aufweisen, falls damit spezifische Wirkungen erzielt werden kann.

Beispielsweis kann die zusätzliche Schicht 19 eine Papierlage sein, die dritte Verbindungsschicht 18 kann wiederum ein Kleber sein, beispielsweise ein Kleber, wie er bereits für die erste und/oder zweite Verbindungsschicht beschrieben wurde, und die haftträge Schicht 7 kann eine Aluminiumfolie oder eine nicht siegelbare Polymerfolie, vorzugsweise aus einem biologisch abbaubarem Material sein. Gegebenenfalls kann die haftträge Schicht 7 eine Außenbedruckung (nicht dargestellt) aufweisen. Falls die haftträge Schicht 7 aus einem nicht siegelfähigen, durchsichtigen Polymer besteht, kann eine Druckschicht auch als Konterdruck auf der Innenseite der haftträgen Schicht vorgesehen sein.

Es wir darauf hingewiesen, dass zahlreiche weitere Schichtabfolgen realisiert werden können, die die in den Ansprüchen definierte erfinderische Idee verwirklichen.

Fig. 3 zeigt eine schematische Schnittdarstellung einer erfindungsgemäßen Kapselplatine 2, in der sich aufgrund eines in der Getränkekapsel aufgebauten Innendrucks ein Riss 20 gebildet hat, durch den das gebrühte bzw. gelöste Getränke ausfließen kann. Die Kapselplatine 2 weist den im Zusammenhang mit der Beschreibung der in Fig. 1 und Fig. 2 dargestellten Verbundfolien 1 offenbarten Aufbau auf und umfasst eine Außenlage 8, eine erste Verbindungsschicht 10 und eine Innenlage 9. Die Innenlage 9 umfasst wiederum eine Mittellage 11, eine zweite Verbindungsschicht 12 und eine Vliesschicht 6.

Im Kapselinneren befindet sich ein Getränkstoff 17, etwa ein lösliches oder nicht lösliches Pulver, gegebenenfalls ein Granulat, körnige Stoffe oder Kombinationen davon (z.B. Kaffeemehl, Teepulver, Kakao, Schokolade, Milchpulver, Medikamente, etc.). Der hierin verwendete Begriff "Getränkstoff" ist breit auszulegen und umfasst alle Formen von Materialien (Feststoffe, Gels, etc.), die in Getränkekapseln 3 zur Herstellung des entsprechenden Getränkes vorgesehen werden können. Die Partikel des Getränkstoffes liegen an der Innenseite 4 der Kapselplatine an. Der Riss 20 erstreckt sich (in Querrichtung) lediglich durch die haftträge Schicht 7 und die Mittellage 11 (einschließlich der entsprechenden Verbindungsschichten), wobei die Vliesschicht 6 zwar im Bereich des Risses 20 auseinandergezogen wird und sich dadurch verschmälert, aber im Allgemeinen nicht ganz aufreißt, sondern den Riss 20 überspannt. Bei größeren Rissen 20 kann es zwar sein, dass auch die Vliesschicht 6 in der Rissmitte auseinandergerissen wird, in diesem Fall ist jedoch die Länge und Breite des Risses in der Vliesschicht 6 deutlich kleiner, als der Riss 20 im dahinterliegenden Bereich. Dadurch bewahrt die Vliesschicht 6 eine Filterfunktion und verhindert einerseits, dass kleinere Partikel des Getränkstoffes 17 durch den Riss 20 austreten und in das gebrühte bzw. gelöste Getränk gelangen können, andererseits verhindert die Vliesschicht 6, dass Partikel des Getränkstoffes 17 den Riss 20 verlegen und den Durchfluss des Getränks verhindern.

### Anwendungsbeispiel

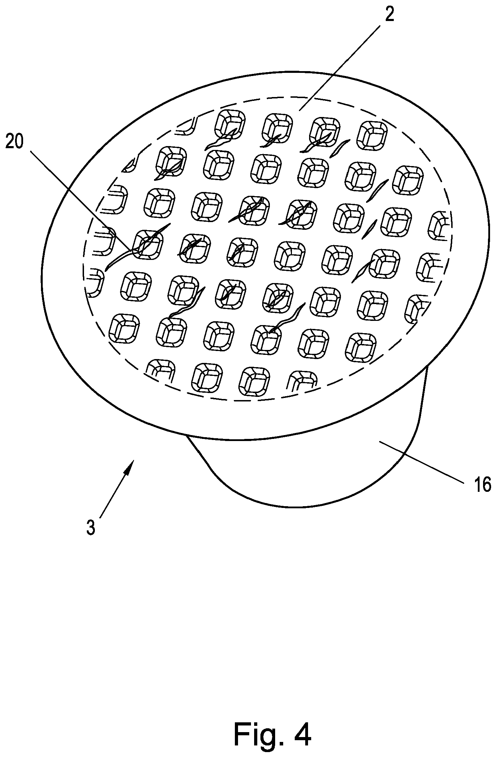

Im Folgenden wird unter Bezugnahme auf Fig. 4 das Ergebnis eines Praxistest anhand eines Anwendungsbeispiels erläutert.

Fig. 4 zeigt eine schaubildliche Darstellung der getesteten Getränkekapsel 3 nach der Verwendung. Zur Herstellung die Getränkekapsel 3 wurde ein Kapselnapf 16 aus einem biologisch abbaubaren und kompostierbaren Polymermaterial auf PLA-Basis mit 5 g Kaffeemehl mit feinem Mahlgrad (mittlere Partikelgröße ca. 300 µm) gefüllt. Der Kapselnapf 16 wurde mit einer Kapselplatine 2 verschlossen, die den folgenden Schichtaufbau aufwies:

| |
|---|
| nicht siegelbare Außenseite |
| kompostierbares Papier, 40 g/m² |
| biologisch abbaubarer Kleber (Morchem PS 255 ECO + CS-95) aufgetragen gemäß Herstellerspezifikation |
| Koextrudierte und in Maschinenrichtung gereckte Folie mit einer ersten Lage (Enddicke 50 µm) aus einer PLA-Polymermatrix, der 60 % Mineralstoffpartikel (Calciumcarbonat) zugesetzt wurden, einer zweiten Lage aus einem Extrusions-Haftvermittler (1 µm) und einer dritten Lage aus PVOH (3 µm). |
| biologisch abbaubarer Kleber (Morchem PS 255 ECO + CS-95) aufgetragen gemäß Herstellerspezifikation |
| PLA-Vlies (17 g/m² bei einer Schichtdicke von etwa 55 µm) |
| siegelbare Innenseite |

Die Siegelung der Kapselplatine 2 auf den Rand des Kapselnapfs 16 erfolgte mit einem Anpressdruck von 4 bar (bei einem Toleranzbereich von etwa 2 bis 6 bar) bei einer Temperatur von 140 °C (bei einem Toleranzbereich von etwa 100 bis 200 °C) über eine Dauer von 0,3 Sekunden (Toleranzbereich etwa 0,2 bis 2 Sekunden).

Die derart hergestellte Getränkekapsel 3 wurde mit einer handelsüblichen Kapsel-Kaffeemaschine (System Nespresso®) zur Herstellung eines Espresso-Kaffees verwendet und die Kapsel wurde anschließend untersucht, wobei insbesondere das Berstverhalten und die Rissbildung der Kapselplatine 2 beurteilt wurde.

In der Kapselplatine 2 waren nach der Verwendung 17 schmale Risse 20 zu erkennen, die im Wesentlichen parallel zur Reckrichtung der koextrudierten Folie verliefen. Die Risse wiesen eine durchschnittliche Länge von etwa 3 mm auf, wobei der längste Riss ca. 7 mm und der kürzeste Riss ca. 1,5 mm lang waren. Die Risse bildeten ein über die Fläche der Kapselplatine 2 sehr regelmäßig verteiltes Muster aus.

Die folgenden Parameter können bei der Gestaltung der Verbundfolie 1 bzw. Kapselplatine 2 berücksichtigt werden, um das gewünschte vorteilhafter Berstverhalten zu erzielen:
- Art und Konsistenz des Getränkstoffes
- Füllmenge des Getränkstoffes
- Betriebsdruck und Druckverlauf
- Temperatur
- verwendete Maschine
- etc.

Der Fachmann, der Kenntnis der hierin offenbarten Lehren hat, ist in der Lage, anhand routinemäßiger Experimente und Tests einen für die jeweiligen Parameter optimalen Aufbau der verwendeten Verbundfolie zu ermitteln.

### Bezugszeichen:

Verbundfolie 1
Kapselplatine 2
Getränkekapsel 3
Innenseite 4
Außenseite 5
Vliesschicht 6
haftträgen Schicht 7
Außenlage 8
Innenlage 9
erste Verbindungsschicht 10
Mittellage 11
zweite Verbindungsschicht 12
ersten Extrudatschicht 13
Extrusions-Haftvermittlerschicht 14
Sauerstoff-Barriereschicht 15
Kapselnapf 16
Getränkstoff 17
dritte Verbindungsschicht 18
zusätzliche Schicht 19
Riss 20

## Patentansprüche

1. Verbundfolie (1) aus welcher vorzugsweise durch Stanz- oder Schneideverfahren zumindest eine Kapselplatine (2) für eine Getränkekapsel (3) herstellbar ist, wobei die Verbundfolie (1) eine siegelbare Innenseite (4) und eine nicht siegelnde Außenseite (5) aufweist, wobei die Innenseite (4) die Oberfläche einer Vliesschicht (6) mit einem siegelbaren Polymer ist und wobei die Außenseite (5) die Oberfläche einer haftträgen Schicht (7) ist, wobei die haftträge Schicht (7) die an die Außenseite (5) angrenzende Schicht einer gegebenenfalls mehrlagigen Außenlage (8) ist, wobei die Vliesschicht (6) die an die Innenseite (4) angrenzende Schicht einer mehrlagigen Innenlage (9) ist, und wobei die Außenlage (8) über eine erste Verbindungsschicht (10) mit der Innenlage (9) verbunden ist, **dadurch gekennzeichnet, dass** die Innenlage (9) eine durchgängige Mittellage (11) aufweist, die über eine zweite Verbindungsschicht (12) mit der Vliesschicht (6) verbunden ist, wobei die Mittellage (11) ein extrudierter und in einer oder mehreren Richtungen orientierter Film ist, welcher in zumindest einer ersten Extrudatschicht (13) eine verformbare Polymermatrix aufweist, der ein Füllmittel aus nicht verformbaren Versprödungspartikeln zugesetzt ist.

2. Verbundfolie (1) nach Anspruch 1, **dadurch gekennzeichnet, dass** die Polymermatrix der ersten Extrudatschicht (13) aus einem biologisch abbaubaren Polymer, insbesondere auf Basis von Polylactid, besteht, und/oder dass die Vliesschicht (6) aus einem biologisch abbaubaren Polymer, insbesondere auf Basis von Polylactid, besteht.

3. Verbundfolie (1) nach Anspruch 1 oder 2, **dadurch gekennzeichnet, dass** das Füllmittel der Polymermatrix der ersten Extrudatschicht (13) mit einem Gewichtsanteil von 5 % bis 95 %, vorzugsweise von 20 % bis 60 %, insbesondere etwa 60 % zugesetzt ist.

4. Verbundfolie (1) nach einem der Ansprüche 1 bis 3, **dadurch gekennzeichnet, dass** die Mittellage (11) über die Fläche jeder Kapselplatine (2) eine homogene Struktur aufweist und/oder wobei die Innenlage (9) über die Fläche jeder Kapselplatine (2) eine homogene Struktur aufweist.

5. Verbundfolie (1) nach einem der Ansprüche 1 bis 4, **dadurch gekennzeichnet, dass** die erste Verbindungsschicht (10) und/oder die zweite Verbindungsschicht (12) einen biologisch abbaubaren Kleber aufweist.

6. Verbundfolie (1) nach einem der Ansprüche 1 bis 5, **dadurch gekennzeichnet, dass** die Mittellage (11) eine koextrudierte Folie ist, welche zumindest die erste Extrudatschicht (13), eine Extrusions-Haftvermittlerschicht (14) und eine Sauerstoff-Barriereschicht (15) umfasst.

7. Verbundfolie (1) nach einem der Ansprüche 1 bis 6, **dadurch gekennzeichnet, dass** die haftträge Schicht (7) eine Papier- oder Aluminiumlage aufweist und gegebenenfalls bedruckt ist.

8. Verbundfolie (1) nach einem der Ansprüche 1 bis 7, **dadurch gekennzeichnet, dass** die Außenlage (8) einen Verbund mit Aluminium und Papier umfasst und gegebenenfalls bedruckt ist.

9. Kapselplatine (2), **dadurch gekennzeichnet, dass** die Kapselplatine (2) vorzugsweise durch ein Stanz- oder Schneideverfahren aus einer Verbundfolie (1) gemäß einem der Ansprüche 1 bis 8 hergestellt ist.

10. Getränkekapsel (3) mit einem Kapselnapf (16) und einer Kapselplatine (2) gemäß Anspruch 9.

11. Verfahren zur Herstellung einer Verbundfolie (1), aus welcher vorzugsweise durch Stanz- oder Schneideverfahren zumindest eine Kapselplatine (2) für eine Getränkekapsel (3) herstellbar ist, wobei das Verfahren die folgenden Schritte aufweist:
- bereitstellen einer gegebenenfalls mehrlagigen Außenlage (8) mit einer haftträgen Schicht (7),
- bereitstellen einer Mittellage (11), die durch Extrudieren zumindest einer ersten Extrudatschicht (13) hergestellt ist, wobei die erste Extrudatschicht (13) eine verformbare Polymermatrix aufweist, der ein Füllmittel aus nicht verformbaren Versprödungspartikeln zugesetzt ist,
- Orientieren der Mittellage (11) in einer oder mehreren Richtungen,
- bereitstellen einer Vliesschicht (6) mit einem siegelbaren Polymer,
- Verbinden der Mittelage (11) über eine erste Verbindungsschicht (10) mit der Außenlage (8) und Verbinden der Vliesschicht (6) über eine zweite Verbindungsschicht (12) mit der Mittellage (11), wobei die Mittellage (11) und die Vliesschicht (6) eine Innenlage (9) der Verbundfolie (1) ausbilden, wobei die Vliesschicht (6) eine siegelbare Innenseite (4) der Verbundfolie (1) ausbildet und wobei die Außenlage (8) mit der haftträgen Schicht (7) eine nicht siegelnde Außenseite (5) der Verbundfolie (1) ausbildet.

12. Verfahren nach Anspruch 11, **dadurch gekennzeichnet, dass** als Polymermatrix der ersten Extrudatschicht (13) ein biologisch abbaubares Polymer, insbesondere auf Basis von Polylactid, verwendet wird, und/oder dass als Vliesschicht (6) ein Vliesmaterial aus einem biologisch abbaubaren Polymer, insbesondere auf Basis von Polylactid, verwendet wird.

13. Verfahren nach Anspruch 11 oder 12, **dadurch gekennzeichnet, dass** die Mittellage (11) als koextrudierte Folie mit zumindest der ersten Extrudatschicht (13), einer Extrusions-Haftvermittlerschicht (14) und einer Sauerstoff-Barriereschicht (15) extrudiert wird.

14. Verfahren zur Herstellung einer Kapselplatine (2), **dadurch gekennzeichnet, dass** die Kapselplatine (2), vorzugsweise durch Stanzen oder Schneiden, aus einer Verbundfolie (1) hergestellt wird, die gemäß einem Verfahren nach einem der Ansprüche 11 bis 13 hergestellt wurde.

15. Verfahren zur Herstellung einer Getränkekapsel (3) umfassend die folgenden Schritte:
- Bereitstellen eines Kapselnapfs (16),
- Einfüllen von Getränkstoff (17) in den Kapselnapf (16) und
- Versiegeln des Kapselnapfs (16) mit einer Kapselplatine (2), die gemäß einem Verfahren nach Anspruch 14 hergestellt wurde.
